# EUROPÄISCHE PATENTSCHRIFT

(11) **EP 2 997 653 B1**
(45) Veröffentlichungstag und Bekanntmachung des Hinweises auf die Patenterteilung: **07.08.2019**
(21) Anmeldenummer: 14719289.2
(22) Anmeldetag: 22.04.2014
(51) Int. Cl.: H02M 1/10, H02M 7/219, H02M 3/335

(54) **SYNCHRONGLEICHRICHTER, VERWENDUNG EINES SOLCHEN SYNCHRONGLEICHRICHTERS IN EINEM SCHALTNETZTEIL, SOWIE SCHALTNETZTEIL**
SYNCHRONOUS RECTIFIER, USE OF SUCH A SYNCHRONOUS RECTIFIER IN A SWITCHED-MODE POWER SUPPLY, AND SWITCH MODE POWER SUPPLY
REDRESSEUR SYNCHRONE, UTILISATION D'UN TEL REDRESSEUR SYNCHRONE DANS UNE ALIMENTATION À DÉCOUPAGE, ET ALIMENTATION À DÉCOUPAGE

(30) Priorität: 14.05.2013 DE 102013104944
(43) Veröffentlichungstag der Anmeldung: 23.03.2016
(73) Patentinhaber: Endress+Hauser SE+Co. KG, 79689 Maulburg (DE)
(72) Erfinder: PAUL, Tobias, 79650 Schopfheim (DE); DONKERS, Niels, 2561TM Den Haag (NL); ALONSO-SCHÖNLAU, Juan Angel, 28670 Villaviciosa de Odon Madrid (ES); RUF, Klaus, 79618 Rheinfelden (DE)
(74) Vertreter: Andres, Angelika Maria
(86) Internationale Anmeldenummer: PCT/EP2014/058063
(87) Internationale Veröffentlichungsnummer: WO 2014/183955

(56) Entgegenhaltungen:
- EP-A1- 1 056 190
- EP-A2- 1 993 197
- WO-A1-96/01003
- DE-A1- 3 304 759
- US-A1- 2009 129 133
- US-A1- 2010 046 264
- US-B1- 6 262 899

## Beschreibung

Die Erfindung bezieht sich auf einen Synchrongleichrichter, die Verwendung eines solchen Synchrongleichrichters in einem Schaltnetzteil, sowie ein Schaltnetzteil mit einem solchen Synchrongleichrichter.

Sämtliche elektronischen Geräte, insbesondere auch Feldgeräte der Automatisierungstechnik, benötigen eine Stromversorgung.

Derartige Feldgeräte der Automatisierungstechnik werden zur Erfassung und/oder Beeinflussung von Prozessvariablen eingesetzt. Beispiele für solche Feldgeräte sind Füllstandsmessgeräte, Massendurchflussmessgeräte, Druck- und Temperaturmessgeräte, pH-Redoxpotential- Messgeräte, Leitfähigkeitsmessgeräte etc., die als Sensoren die entsprechenden Prozessvariablen Füllstand, Durchfluss, Druck, Temperatur, pH-Wert bzw. Leitfähigkeitswert erfassen. Zur Beeinflussung von Prozessvariablen dienen sogenannte Aktoren, z. B. Ventile, die den Durchfluss einer Flüssigkeit in einem Rohrleitungsabschnitt steuern oder Pumpen, die den Füllstand in einem Behälter ändern. Als Feldgeräte werden somit im Prinzip alle Geräte bezeichnet, die prozessnah eingesetzt werden und die prozessrelevante Informationen liefern oder verarbeiten. Unter dem in Verbindung mit der Erfindung verwendeten Begriff Feldgerät sind somit alle Typen von Messgeräten und Aktoren zu subsumieren. Weiterhin umfasst der Begriff Feldgerät aber auch z.B. ein Gateway, einen Funkadapter oder andere in ein Bussystem integrierte/integrierbare Busteilnehmer.

Eine Vielzahl solcher Feldgeräte wird von der Firmengruppe Endress + Hauser hergestellt und vertrieben.

Wie bereits erwähnt, benötigen derartige Feldgeräte eine Stromversorgung. Hierfür sind aus dem Stand der Technik im Wesentlichen drei Varianten bekannt um Geräte bzw. Feldgeräte aus dem Netz mit Strom zu versorgen. Bei allen drei Varianten ist bei Netzbetrieb eine galvanische Trennung mittels zumindest eines Transformators nötig. Der einfachste Fall einer Gleichrichtung ist der, in dem ein Netztransformator (50 Hz) mit einem nachgeschalteten linearen Spannungsregler eingesetzt wird. Der Wirkungsgrad einer solchen Schaltung ist jedoch relativ schlecht. Um diese Verluste zu reduzieren, wird der lineare Spannungsregler durch einen Schaltregler ersetzt. Auf diese Weise kann ein Wirkungsgrad von 50-70% erzielt werden. Aufgrund dessen, dass sich der Schaltregler auf der Sekundärseite des Netztransformators befindet, werden derartige Schaltungen auch als sekundär getaktet Schaltnetzteile bezeichnet. Der Wirkungsgrad dieser sekundär getakteten Schaltnetzteile, lässt sich durch den Einsatz eines Hochfrequenztransformators (typischerweise einige kHz bis zu einem MHz) weiter steigern. Allerdings ist der technische Aufwand bei dieser Schaltungsform am größten. Zuerst muss die Netzspannung gleichgerichtet, dann in eine hochfrequente Wechselspannung umgewandelt werden, um sie anschließend transformieren zu können. Für eine gewünschte Ausgangsspannung ist es zudem noch nötig, die Pulsbreite zu regeln. Hierfür wird eine Regelschleife, die zwischen der Sekundärseite und der Primärseite ausgebildet ist, verwendet. Um weiterhin eine galvanische Trennung zu haben, ist eine Potentialtrennung, bspw. ein Optokoppler, in dieser Regelschleife ausgebildet. Derartig ausgebildete Schaltungsformen werden auch als primär getaktete Schaltnetzteile bezeichnet. Diese primär getakteten Schaltnetzteile weisen typischerweise einen Eingangsspannungsbereich auf, der sich über einen Faktor von ungefähr 5 erstreckt, bspw. von 20 bis 100V, wobei im niedrigen Eingangsspannungsbereich, typischerweise ca. 20 bis 40V, der Wirkungsgrad allerdings niedriger als 60% ist.

Aufgabe der Erfindung ist es, derartige Schaltnetzteile zu optimieren.

Die Aufgabe wird durch einen Synchrongleichrichter, die Verwendung eines solchen Synchrongleichrichters in einem Schaltnetzteil sowie durch ein Schaltnetzteil zur Energieversorgung eines Gerätes gelöst.

Hinsichtlich des Synchrongleichrichters wird die Aufgabe durch eine Synchrongleichrichter gelöst, der ein Wechselspannungssignal als Eingangssignal gleichrichtet und/oder ein Gleichspannungssignal als Eingangssignal zur Verwendung als Ausgangssignal weiterleitet, zumindest umfassend:
- eine Gleichrichteinheit bestehend aus zumindest einem steuerbaren Schaltelement;
- eine Glättungseinheit, die der Gleichrichteinheit nachgeschaltet ist und das von der Gleichrichteinheit gleichgerichtete oder weitergeleitete Signal glättet und zur Verwendung als Ausgangssignal bereitstellt;
- eine Steuerungslogik, die anhand des Eingangssignals und des von der Glättungseinheit stammenden Ausgangssignals die Gleichrichteinheit ansteuert.

Erfindungsgemäß wird das Schaltnetzteil durch den Einsatz eines Synchrongleichrichters optimiert, der einen hohen Wirkungsgrad bei niedrigen Eingangsspannungen erzielt. Zusätzlich wird der hohe
technische Aufwand, der bei derartigen primär getakteten Schaltnetzteilen betrieben wird, durch den Einsatz des Synchrongleichrichters reduziert, da dieser beim Einsatz in ein Schaltnetzteil, insbesondere Niederspannungsnetzteil, nicht mehr zwingend eine Regelschleife zwischen der Primärseite und der Sekundärseite benötigt. Hierfür weist der Synchrongleichrichter eine Steuerungslogik auf, die zumindest ein steuerbares Schaltelement einer Gleichrichteinheit ansteuert. Die Steuerungslogik erzeugt bspw. mittels eines Mikrocontroller-gesteuerten Programms anhand des Ein- und Ausgangssignals die nötigen Steuersignale. Auf diese Weise passt sich der Synchrongleichrichter flexible auf das Eingangssignal an, wobei die Steuerungslogik die Eingangsspannung unabhängig davon, ob es sich um eine Gleichspannung oder eine Wechselspannung mit beliebiger Frequenz handelt, erkennt und dafür sorgt, dass ein entsprechendes Ausgangssignal am Synchrongleichrichter zur Verfügung steht bzw. anliegt. Dabei werden beim Eingangssignal insbesondere die Frequenz und die Amplitude ausgewertet.

Der Synchrongleichrichter ermöglicht somit, in dem Fall, dass eine Wechselspannung als Eingangsspannung anliegt, diese gleichzurichten und in dem Fall, dass eine Gleichspannung anliegt, diese weiterzuleiten, so dass entweder das gleichgerichtete Wechselspannungssignal als Ausgangssignal oder aber das weitergeleitete Gleichspannungssignal als Ausgangssignal zur Verfügung steht. Ferner ist es durch den Einsatz der Steuerungslogik möglich, Plausibilitätsprüfungen und/oder Fehleranalysen durchzuführen.

Gemäß einer vorteilhaften Ausgestaltung der Erfindung ist eine Überspannungsschutzeinheit vorgesehen, welche zwischen der Gleichrichteinheit und der Glättungseinheit angeordnet ist und das von der Gleichrichteinheit gleichgerichtete oder weitergeleitete Signal auf eine bestimmte Abschaltschwelle begrenzt. Die Ausgestaltung sieht insbesondere vor, dass die Abschaltschwelle veränderbar ist. Ein derartig ausgebildeter Synchrongleichrichter bietet den Vorteil, dass die Glättungseinheit, welche vorzugsweise ein Kondensator darstellt, optimal in seinen Eigenschaften, insbesondere der Kapazität und somit auch der Baugröße anpassbar ist. Durch die Überspannungsschutzeinheit wird in dem Fall, dass das gleichgerichtete oder weitergeleitete Signal die Abschaltschwelle übersteigt, das Signal begrenzt, umso eine Zerstörung der Glättungseinheit zu verhindern.

Auf diese Weise kann das von der Gleichrichteinheit entweder gleichgerichtete oder weitergeleitete Signal begrenzt werden, bevor es der Glättungseinheit zugeführt wird, umso den Platzbedarf der Glättungseinheit zu reduzieren.

Gemäß einer weiteren vorteilhaften Ausgestaltung der Erfindung umfasst die Steuerungslogik eine digitale Logikeinheit, die mittels zumindest eines Steuersignales das zumindest eine steuerbare Schaltelement der Gleichrichteinheit ansteuert. Ferner ist vorgesehen, dass die Steuerungslogik eine Nullpunktdetektionseinheit und eine Vergleichseinheit umfasst, wobei die Nullpunktdetektionseinheit die Nulldurchgänge des Eingangssignals erfasst und daraus ein erstes Hilfssignal ableitet und die Vergleichseinheit das Eingangssignal mit dem Ausgangssignal vergleicht und daraus ein zweites Hilfssignal ableitet. Insbesondere ist auch vorgesehen, dass die digitale Logikeinheit anhand des ersten und des zweiten Hilfssignales das zumindest eine Steuersignal zur Ansteuerung des zumindest einen steuerbaren Schaltelements der Gleichrichteinheit erzeugt. Ferner sieht die Ausgestaltung vor, dass das erste Hilfssignal und das zweite Hilfssignal und das Steuersignal digitale Signale darstellen.

Gemäß einer weiteren vorteilhaften Ausgestaltung der Erfindung stellt das zumindest eine steuerbare Schaltelement ein Halbleiter dar. Als Halbleiter-Schaltelement kommen hierbei insbesondere Feldeffekttransistoren in Betracht.

Hinsichtlich der Verwendung eines Synchrongleichrichters wird die Aufgabe dadurch gelöst, dass ein Synchrongleichrichter wie er zumindest in einer der zuvor beschriebenen Ausgestaltungen beschrieben ist, in einem Schaltnetzteil verwendet wird, wobei der Synchrongleichrichter primärseitig angeordnet ist und ein Eingangssignal des Schaltnetzteiles aufnimmt und dies einem nachgeordneten Gleichspannungswandler zuführt, wobei der Gleichspannungswandler eine galvanische Trennung zwischen Primärseite und Sekundärseite ausbildet und das Schaltnetzteil keine Regelschleife zwischen der Primärseite und der Sekundärseite benötigt.

Hinsichtlich des Schaltnetzteiles wird die Aufgabe durch ein Schaltnetzteil zur Energieversorgung einer Last gelöst, wobei das Schaltnetzteil eine Primärseite und eine Sekundärseite aufweist, wobei die Primärseite zumindest einen nach zumindest einem der vorhergehenden Ansprüche ausgebildeten Synchrongleichrichter aufweist, welcher das Eingangssignal aufnimmt und dies einem nachgeordneten Gleichspannungswandler zuführt, der eine galvanische Trennung zwischen der Primärseite und der Sekundärseite ausbildet und wobei das Schaltnetzteil keine Regelschleife zwischen der Primärseite und der Sekundärseite aufweist.

Die Erfindung wird anhand der nachfolgenden Zeichnungen näher erläutert. Es zeigt:
Fig. 1: eine schematische Darstellung des erfindungsgemäßen Synchrongleichrichters ,
Fig. 2: eine detaillierte Darstellung des erfindungsgemäßen Synchrongleichrichters,
Fig. 3: eine schematische Darstellung der Ein- und Ausgangssignale des erfindungsgemäßen Synchrongleichrichters, und
Fig. 4: eine schematische Darstellung eines Schaltnetzteiles mit einem erfindungsgemäßen Synchrongleichrichter.

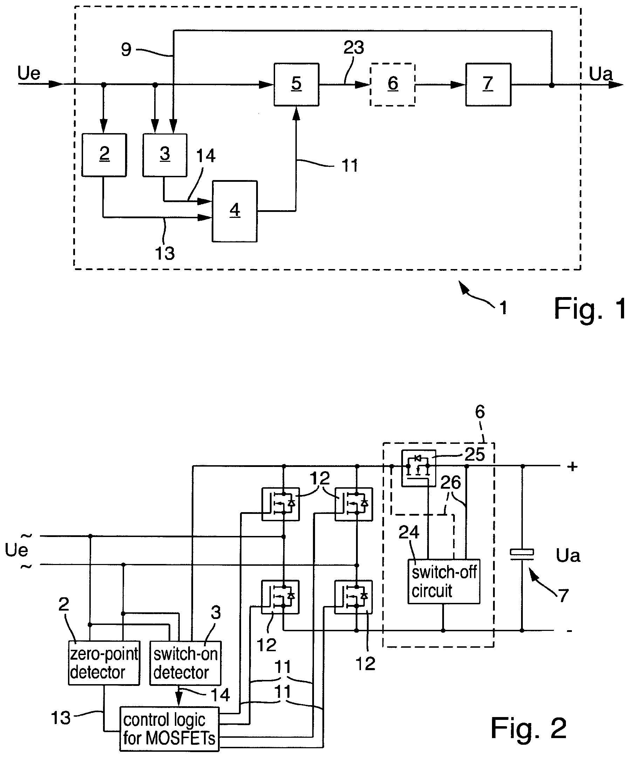

Figur 1 zeigt eine schematische Darstellung des erfindungsgemäßen Synchrongleichrichters 1 der ein Wechselspannungssignal als Eingangssignal Uₑ gleichrichtet oder ein Gleichspannungssignal als Eingangssignal Uₑ zur Verwendung als Ausgangssignal Uₐ weiterleitet. Das Eingangssignal Uₑ kann ein Wechselspannungssignal beliebiger Frequenz (bspw. 50 oder 60 Hz) oder aber auch ein Gleichspannungssignal darstellen. Ferner kann das Eingangssignal Uₑ eine Spannung von 15 bis 230 Volt aufweisen.

Der erfindungsgemäße Synchrongleichrichter 1 umfasst hierbei:
- eine Gleichrichteinheit 5 bestehend aus zumindest einem steuerbaren Schaltelement 12. Das Schaltelement 12 stellt hierbei ein Halbleiter, insbesondere ein Feldeffekttransistor dar, wie bspw. STD70N10F4, IRFR4615, NTD6414AN oder FDD86110. Die Gleichrichteinheit 5 richtet in dem Fall, dass das Eingangssignal Uₑ ein Wechselspannungssignal darstellt, dieses gleich und in dem Fall, dass das Eingangssignal Uₑ ein Gleichspannungssignal darstellt, leitet die Gleichrichteinheit 5 das Gleichspannungssignal weiter.
- eine Glättungseinheit 7, die der Gleichrichteinheit 5 nachgeschaltet ist und das von der Gleichrichteinheit 5 gleichgerichtete oder weitergeleitete Signal 23 glättet und zur Verwendung als Ausgangssignal Uₐ bereitstellt.
- eine Steuerungslogik 2, 3, 4, die anhand des Eingangssignals Uₑ und des von der Glättungseinheit 7 stammenden Ausgangssignals Uₐ die Gleichrichteinheit 5 ansteuert. Die Steuerungslogik 2, 3, 4 umfasst hierbei eine digitale Logikeinheit 4, die mittels zumindest eines Steuersignales 11 das zumindest ein steuerbare Schaltelement 12 der Gleichrichteinheit 5 ansteuert. Ferner umfasst die Steuerungslogik 2, 3, 4 eine Nullpunktdetektionseinheit 2, die die Nulldurchgänge des Eingangssignals Uₑ detektiert und daraus ein erstes Hilfssignal 13 ableitet, wobei aus dem ersten Hilfssignal 13 der Ausschaltpunkt 22 für die Gleichrichteinheit generiert wird.

Zusätzlich umfasst die Steuerungslogik 2, 3, 4 eine Vergleichseinheit 3, die im einfachsten Fall ein Komparator mit integriertem (passiven) Gleichrichter darstellt und das Eingangssignal Uₑ mit dem Ausgangssignal Uₐ vergleicht, umso ein zweites Hilfssignal 14 abzuleiten, welches den Einschaltpunkt 21 für die Gleichrichteinheit 5 repräsentiert.

Die digitale Logikeinheit 2, 3, 4 erzeugt anhand des Einschaltpunktes 21 und des Ausschaltpunktes 22, die in Form des ersten und zweiten Hilfssignals 13, 14 übertragen werden, das Steuersignal bzw. die Steuersignale 11, falls mehrere Schaltelemente 12 eingesetzt werden. Das erste Hilfssignal 13 als auch das zweite Hilfssignal 14 und das Steuersignal bzw. die Steuersignale 11 stellen dabei digitale Signale dar.

Fig. 1 zeigt ferner eine Überspannungsschutzeinheit 6, welche zwischen der Gleichrichteinheit 5 und der Glättungseinheit 7 angeordnet ist, um das von der Gleichrichteinheit 5 gleichgerichtete Signal oder weitergeleitetes Signal 23 auf eine bestimmte Abschaltschwelle 10 zu begrenzen. Die Abschaltschwelle 10 ist frei wählbar bzw. einstellbar und kann somit optimal an einen Gleichspannungswandler (DC/DC-Wandler) 16 beim Einsatz des Synchrongleichrichters 1 in einem Schaltnetzteil 15 angepasst werden. Zudem verhindert die Überspannungsschutzeinheit 6, dass die nachgeordnete Glättungseinheit 7 über die Abschaltschwelle 10 hinaus aufladbar ist und beugt somit einer Zerstörung durch ein zu hohes Signal vor.

Fig. 2 zeigt eine detaillierte Darstellung des erfindungsgemäßen Synchrongleichrichters 1. Bei dem die Steuerungslogik 2, 3, 4 derartig ausgestaltet ist, dass sie anhand der Nullpunktdetektionseinheit 2 und der Vergleichseinheit 3 sowie der digitalen Logikeinheit 4 vier Steuersignale 11 erzeugt, die die vier Schaltelemente 12 der Gleichrichteinheit 5 ansteuern. Die vier Schaltelemente 12 sind hierbei als Feldeffekttransistoren ausgebildet.

Die Überspannungsschutzeinheit 6 umfasst eine Ausschaltlogik 24 und ein Abschaltelement 25, welches beim Überschreiten der Abschaltschwelle 10 von der Ausschaltlogik 24 aktiviert wird. Die Ausschaltlogik 24 kann ihr Feedback-Signal 26 je nach Ausführung vor (gestrichelte Linie in Fig. 2) oder nach (durchgezogene Linie in Fig. 2) dem Abschaltelement 25 abgreifen.

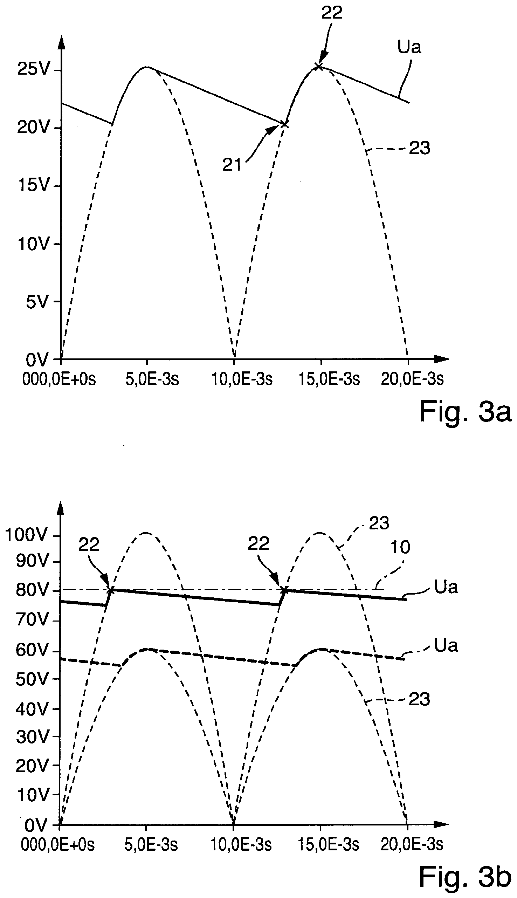

Fig. 3 zeigt eine schematische Darstellung von Signalen des erfindungsgemäßen Synchrongleichrichters 1. Hierfür ist in Fig. 3a) der Fall dargestellt, dass ein Wechselspannungssignal als Eingangssignal Uₑ an dem Synchrongleichrichter 1 anliegt.

Zur Ansteuerung der Schaltelemente 12 der Gleichrichteinheit 5 dient, wie bereits beschrieben, die digitale Steuerungslogik 4, die mittels der Nullpunktdetektionseinheit 2 und der Vergleichseinheit 3 die Schaltpunkte ermittelt. Hierbei ermittelt die Nullpunktdetektionseinheit 2 den Ausschaltpunkt 22 für die Gleichrichteinheit 5, derartig, dass der Ausschaltpunkt 22 den Zeitpunkt darstellt, der zeitlich gesehen zwischen zwei Nulldurchgängen liegt. Zusätzlich leitet die Vergleichseinheit 3 den Einschaltpunkt 21 aus der Differenz zwischen dem Ausgangssignal Uₐ und dem intern in der Vergleichseinheit gleichgerichteten Eingangssignal Uₑ ab, bspw. wenn die Differenz größer als ein vorgegebener Differenzwert ist.

Die so ermittelten Einschaltpunkte 21 und Ausschaltpunkte 22 werden mittels des ersten Hilfssignales 13 und des zweiten Hilfssignal 14 der digitalen Logikeinheit 4 zugeführt, die wiederum mittels des Steuersignals 11 das Schaltelement 12 der Gleichrichteinheit 5 ansteuert. Auf diese Weise wird das Eingangssignal Uₑ mittels des erfindungsmäßigen Synchrongleichrichters 1 in ein entsprechendes Ausgangssignal Uₐ gewandelt.

Fig. 3b) zeigt die Abschaltschwelle 10 bei der die Überspannungsschutzeinheit 6 eingreift. Hierzu sind zwei Szenarien dargestellt, einmal bei dem das gleichgerichtete Signal (gestrichelte Linien) 23 deutlich unterhalb der Abschaltschwelle 10 und einmal bei dem das gleichgerichtete Signal (durchgezogene Linie) 23 oberhalb der Abschaltschwelle 10 liegt. In dem Fall, dass das gleichgerichtete Signal 23 oberhalb der Abschaltschwelle 10 liegt, wird das Ausgangssignal Uₐ auf diese Abschaltschwelle 10 dadurch begrenzt, dass der Ausschaltpunkt 22 entsprechend der Abschaltschwelle 10 angepasst wird. Die Abschaltschwelle 10 ist dabei frei wählbar, umso die Glättungseinheit 7, welche bspw. ein Kondensator umfasst, nicht über diese Schwelle hinaus zu laden. Auf diese Weise ist der Eingangsbereich Uₑ der Glättungseinheit 7 auf die Abschaltschwelle 10 begrenzt und die Baugröße des Kondensators kann entsprechend angepasst werden.

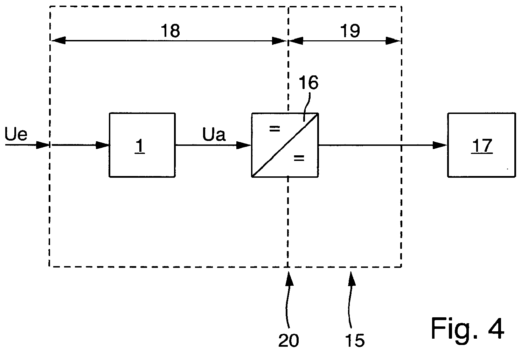

Fig. 4 zeigt eine schematische Darstellung eines Schaltnetzteiles 15 mit einem erfindungsgemäßen Synchrongleichrichter 1. Das Schaltnetzteil 15 dient dabei zur Energieversorgung einer Last 17, bspw. eines Feldgerätes. Das Schaltnetzteil 15 weist eine Primärseite 18 und eine Sekundärseite 19 auf. Die Primärseite 18 umfasst dabei einen erfindungsgemäßen Synchrongleichrichter 1, wie er zuvor beschrieben ist. Der Synchrongleichrichter 1 nimmt die Eingangsspannung Uₑ, welche eine Gleichspannung oder eine Wechselspannung darstellt, auf und führt das Ausgangssignal Uₐ einem nachgeordneten Gleichspannungswandler 16 zu. Der Gleichspannungswandler 16 bildet dabei in sich eine galvanische Trennung 20 zwischen der Primärseite 18 und der Sekundärseite 19 aus, wobei keine Regelschleife zwischen den beiden Seiten 18, 19 vorgesehen ist bzw. benötigt wird.

### Bezugszeichenliste

- 1: Synchrongleichrichter
- 2: Nullpunktdetektionseinheit
- 3: Vergleichseinheit
- 4: digitale Logikeinheit
- 5: Gleichrichteinheit
- 6: Überspannungsschutzeinheit
- 7: Glättungseinheit
- 9: Regelsignal
- Ue: Eingangssignal
- Ua: Ausgangssignal
- 10: Abschaltschwelle
- 11: Steuersignal
- 12: Schaltelement
- 13: erstes Hilfssignal
- 14: zweites Hilfssignal
- 15: Schaltnetzteil
- 16: Gleichspannungswandler bzw. DC/DC-Wandler
- 17: Last
- 18: Primärseite
- 19: Sekundärseite
- 20: Galvanische Trennung
- 21: Einschaltpunkt für Gleichrichteinheit
- 22: Ausschaltpunkt für Gleichrichteinheit
- 23: Gleichgerichtetes Signal
- 24: Ausschaltlogik
- 25: Abschaltelement
- 26: Feedback-Signal

## Patentansprüche

1. Synchrongleichrichter (1), der dazu eingerichtet ist, ein Wechselspannungssignal als Eingangssignal gleichzurichten oder ein Gleichspannungssignal als Eingangssignal zur Verwendung als Ausgangssignal weiterzuleiten, zumindest umfassend:
- eine Gleichrichteinheit (5) bestehend aus zumindest einem steuerbaren Schaltelement (12);
- eine Glättungseinheit (7), die der Gleichrichteinheit (5) nachgeschaltet ist und das von der Gleichrichteinheit (5) gleichgerichtete oder weitergeleitete Signal glättet und zur Verwendung als Ausgangssignal (Ua) bereitstellt;
- eine Steuerungslogik (2, 3, 4), die anhand des Eingangssignals und des von der Glättungseinheit (7) stammenden Ausgangssignals (Ua) die Gleichrichteinheit (5) ansteuert, **dadurch gekennzeichnet, dass**
die Steuerungslogik (2, 3, 4) eine digitale Logikeinheit (4), die mittels zumindest eines Steuersignales (11) das zumindest eine steuerbare Schaltelement (12) der Gleichrichteinheit (5) ansteuert, eine Nullpunktdetektionseinheit (2) und eine Vergleichseinheit (3) umfasst, wobei die Nullpunktdetektionseinheit (2) die Nulldurchgänge des Eingangssignals (Ue) erfasst und daraus ein erstes Hilfssignal (13) ableitet, woraus der Ausschaltpunkt (22) für die Gleichrichtereinheit (5) generiert wird, und die Vergleichseinheit (3) das Eingangssignal (Ue) mit dem Ausgangssignal (Ua) vergleicht und daraus ein zweites Hilfssignal (14) ableitet, welches den Einschaltpunkt (21) für die Gleichrichtereinheit (5) repräsentiert, wobei die digitale Logikeinheit (4) anhand des ersten und des zweiten Hilfssignales (13, 14) das zumindest eine Steuersignal (11) zur Ansteuerung des zumindest einen steuerbaren Schaltelements (12) der Gleichrichteinheit (5) erzeugt, so dass der Synchrongleichrichter entweder ein gleichgerichtetes Wechselspannungssignal oder aber das weitergeleitete Gleichspannungssignal als Ausgangssignal zur Verfügung stellt.

2. Synchrongleichrichter nach Anspruch 1, wobei eine Überspannungsschutzeinheit (6) vorgesehen ist, welche zwischen der Gleichrichteinheit (5) und der Glättungseinheit (7) angeordnet ist und das von der Gleichrichteinheit (5) gleichgerichtete Signal (23) auf eine bestimmte Abschaltschwelle (10) begrenzt.

3. Synchrongleichrichter nach Anspruch 2, wobei die Abschaltschwelle (10) veränderbar ist.

4. Synchrongleichrichter nach Anspruch 1, wobei das erste und das zweite Hilfssignal (13, 14) und das Steuersignal (11) digitale Signale darstellen.

5. Synchrongleichrichter nach einem oder mehreren der vorhergehenden Ansprüche, wobei das zumindest eine steuerbare Schaltelement (12) ein Halbleiter darstellt.

6. Verwendung eines Synchrongleichrichters nach einem der Ansprüche 1 bis 5 in einem Schaltnetzteil (15), wobei der Synchrongleichrichter (1) primärseitig angeordnet ist und ein Eingangssignal (Ue) des Schaltnetzteiles (15) aufnimmt und dies einem nachgeordneten Gleichspannungswandler (16) zuführt, wobei der Gleichspannungswandler (16) eine galvanische Trennung (20) zwischen Primärseite (18) und Sekundärseite (19) ausbildet und das Schaltnetzteil (15) keine Regelschleife zwischen der Primärseite (18) und der Sekundärseite (19) aufweist.

7. Schaltnetzteil zur Energieversorgung einer Last (17), wobei das Schaltnetzteil (15) eine Primärseite (18) und eine Sekundärseite (19) aufweist, wobei die Primärseite (18) zumindest einen Synchrongleichrichter (1) nach zumindest einem der Ansprüche 1 bis 5 aufweist, welcher das Eingangssignal (Ue) aufnimmt und dies einem nachgeordneten Gleichspannungswandler (16) zuführt, der eine galvanische Trennung zwischen der Primärseite und der Sekundärseite ausbildet und wobei das Schaltnetzteil (15) keine Regelschleife zwischen der Primärseite (18) und der Sekundärseite (19) aufweist.

## Claims

1. Synchronous rectifier (1) which is designed to rectify an alternating voltage signal as the input signal, or to transmit a DC voltage signal as the input signal for use as the output signal, at least comprising:
- a rectification unit (5) consisting of at least a controllable switching element (12);
- a smoothing unit (7), which is downstream from the rectification unit (5), which smoothes the signal which is rectified or transmitted by the rectification unit (5) and makes it available for use as an output signal (Ua) ;
- a control system logic (2, 3, 4) which controls the rectification unit (5) using the input signal and the output signal (Ua) coming from the smoothing unit (7),
**characterized in that**
the control system logic (2, 3, 4) has a digital logic unit (4), which controls the at least one controllable switching element (12) using at least a control signal (11), a zero point detection unit (2) and a comparison unit (3), wherein the zero point detection unit (2) detects the zero crossings of the input signal (Ue) and derives a first auxiliary signal (13) from this, wherein the switch-off point (22) for the rectification unit (5) is generated from this, and wherein the comparison unit (3) compares the input signal (Ue) with the output signal (Ua) and derives a second auxiliary signal (14), said signal representing the switch-on point (21) for the rectification unit (5), wherein the digital logic unit (4) uses the first and second auxiliary signal (13, 14) to generate the at least one control signal (11) to control the at least one controllable switching element (12) of the rectification unit (5), such that the synchronous rectifier provides either a rectified alternating voltage signal or the transmitted DC voltage signal as the output signal.

2. Synchronous rectifier as claimed in Claim 1, wherein an overvoltage protection unit (6) is provided, which is arranged between the rectification unit (5) and the smoothing unit (7), and limits the rectified signal (23) provided by the rectification unit (5) to a certain switch-off threshold (10).

3. Synchronous rectifier as claimed in Claim 2 wherein the switch-off threshold (10) can be changed.

4. Synchronous rectifier as claimed in Claim 1, wherein the first and the second auxiliary signal (13, 14) and the control signal (11) are digital signals.

5. Synchronous rectifier as claimed in one or more of the previous claims, wherein the at least one controllable switching element (12) is a semi-conductor.

6. Use of a synchronous rectifier as claimed in one of the Claims 1 to 5 in a switching power unit (15), wherein the synchronous rectifier (1) is arranged on the primary side and receives an input signal (Ue) of the switching power unit (15) and supplies this to a downstream DC converter (16), wherein the DC converter (16) constitutes a galvanic isolation (20) between the primary side (18) and the secondary side (19), and the switching power unit (15) does not have a control loop between the primary side and the secondary side (19).

7. Switching power unit to supply energy to a load (17), wherein the switching power unit (15) has a primary side (18) and a secondary side (19), wherein the primary side (18) has at least a synchronous rectifier (1) as claimed in at least one of the Claims 1 to 5, wherein said rectifier receives the input signal (Ue) and supplies this to a downstream DC converter (16) which forms a galvanic isolation between the primary side and the secondary side and wherein the switching power unit (15) does not have a control loop between the primary side (18) and the secondary side (19).

## Revendications

1. Redresseur synchrone (1), lequel est conçu de telle sorte à redresser un signal de tension alternative en tant que signal d'entrée ou à transmettre un signal de tension continue en tant que signal d'entrée pour une utilisation en tant que signal de sortie, comprenant au moins :
- une unité de redressement (5) constituée d'au moins un élément de commutation commandable (12) ;
- une unité de lissage (7), laquelle est couplée en aval de l'unité de redressement (5), et qui lisse le signal redressé ou transmis par l'unité de redressement, et le met à disposition pour une utilisation en tant que signal de sortie (Ua) ;
- une logique de commande (2, 3, 4) qui, au moyen du signal d'entrée et du signal de sortie (Ua) provenant de l'unité de lissage (7), commande l'unité de redressement (5),
**caractérisé**
**en ce que** la logique de commande (2, 3, 4) comprend une unité logique numérique (4), qui commande au moyen d'au moins un signal de commande (11) l'au moins un élément de commutation commandable (12) de l'unité de redressement (5), une unité de détection du zéro (2) et une unité de comparaison (3), l'unité de détection du zéro (2) détectant les passages par zéro du signal d'entrée (Ue) et en dérivant un premier signal auxiliaire (13), ce par quoi le point de coupure (22) pour l'unité de redressement (5) est généré, et l'unité de comparaison (3) comparant le signal d'entrée (Ue) avec le signal de sortie (Ua) et en dérivant un deuxième signal auxiliaire (14), qui représente le point d'enclenchement (21) pour l'unité de redressement (5), l'unité logique numérique (4) générant au moyen du premier et du deuxième signal auxiliaire (13, 14) l'au moins un signal de commande (11) destiné à commander l'au moins un élément de commutation commandable (12) de l'unité de redressement (5), si bien que le redresseur synchrone met à disposition soit un signal de tension alternative redressé, soit le signal de tension continue transmis en tant que signal de sortie.

2. Redresseur synchrone selon la revendication 1, pour lequel est prévue une unité de protection contre la surtension (6), laquelle est disposée entre l'unité de redressement (5) et l'unité de lissage (7), et pour lequel le signal redressé (23) par l'unité de redressement (5) est limité à un seuil de coupure (10) déterminé.

3. Redresseur synchrone selon la revendication 2 pour lequel le seuil de coupure (10) est réglable.

4. Redresseur synchrone selon la revendication 1, pour lequel le premier et le deuxième signal auxiliaire (13, 14) et le signal de commande (11) sont des signaux numériques.

5. Redresseur synchrone selon l'une ou plusieurs des revendications précédentes, pour lequel l'au moins un élément de commutation commandable (12) est un semi-conducteur.

6. Utilisation d'un redresseur synchrone selon l'une des revendications 1 à 5 dans une alimentation à découpage (15), le redresseur synchrone (1) étant disposé côté primaire et reçoit un signal d'entrée (Ue) de l'alimentation à découpage (15), et achemine ce signal à un convertisseur de tension continue (16) couplé en aval, le convertisseur de tension continue (16) constituant une séparation galvanique entre le côté primaire (18) et le côté secondaire (19), et l'alimentation à découpage (15) ne présentant aucune boucle de régulation entre le côté primaire (18) et le côté secondaire (19).

7. Alimentation à découpage destinée à l'alimentation en énergie d'une charge (17), l'alimentation à découpage (15) comportant un côté primaire (18) et un côté secondaire (19), le côté primaire (18) comprenant au minimum un redresseur synchrone (1) selon au moins l'une des revendications 1 à 5, lequel redresseur reçoit le signal d'entrée (Ue) et l'achemine au convertisseur de tension continue (16) couplé en aval, lequel convertisseur constitue une séparation galvanique entre le côté primaire et le côté secondaire, et l'alimentation à découpage (15) ne présentant aucune boucle de régulation entre le côté primaire (18) et le côté secondaire (19).
